# EUROPEAN PATENT APPLICATION

(11) **EP 2 520 784 A1**
(43) Date of publication of application: **07.11.2012**
(21) Application number: 11768417.5
(22) Date of filing: 11.04.2011
(51) Int. Cl.: F02B 63/06, F02D 25/00, F02D 29/00

(54) **POWER UNIT AND CONTROLLING METHOD THEREFOR**

(30) Priority: 13.04.2010 CN 201010145312
(71) Applicant: Changsha Zoomlion Heavy Industry Science & Technology Development Co., Ltd., Changsha, Hunan 410013 (CN); Hunan Zoomlion Special Vehicle Co. Ltd., Changde, Hunan 415106 (CN)
(72) Inventor: ZHAN, Chunxin, Changsha, Hunan 410013 (CN); LIU, Quan, Changsha, Hunan 410013 (CN); GAO, Yiping, Changsha, Hunan 410013 (CN); LI, Weifu, Changsha, Hunan 410013 (CN); WANG, Shaojun, Changsha, Hunan 410013 (CN); ZHOU, Hong, Changsha, Hunan 410013 (CN)
(74) Representative: Rupprecht, Kay
(86) International application number: PCT/CN2011/072625
(87) International publication number: WO 2011/127805

(57) **Abstract**

A power unit includes two or more power modules (1, 2, 3), each comprising an engine (11), a transfer case (12) connected to the engine (11) and a hydraulic pump set (13) connected to the transfer case (12). A controlling method for the power unit is also disclosed. Compared to the prior art of using a single super high power engine, the hydraulic mobile crane using the power unit has advantages of low cost, high reliability, and not being subjected to the restrictions by road transportation conditions during transportation.

## Description

### Technical Field

The present invention relates to hydraulic power transmission, in particular to a power unit and a controlling method for the power unit.

### Background of the Invention

As the hoisting capacity of the hydraulic mobile crane becomes higher and higher, the requirement for engine power increases accordingly; in addition, as the crane becomes more and more heavier, the crane size increases accordingly. Thus, the requirement for installation of the hydraulic pump set and transportation of the equipment is higher.

Presently, cranes usually employ a closed-type hydraulic system, which generates low heat during operation and therefore is widely used for hydraulic power transmission in large-sized machines. In such a system, owing to the capacity limit of the hydraulic pump, a plurality of hydraulic pumps have to be used to meet the requirement for hoisting speed of a large-sized crane; these hydraulic pumps are driven by a single engine and outputs power via a single transfer case.

For the same power output, the cost of a single engine is higher than that of several smaller engines; in addition, in the case of super high power ouptut, the reliability of a single engine is inferior. For a system with a single engine and a single transfer case, to achieve high power output, a plurality of hydraulic pumps are required; as a result, the transfer case must have more power outlets and larger size, and therefore is difficult to install. Moreover, a single super-high power engine is heavy in weight and large in size, and therefore the mounting chassis for the engine is bulky; in the prior cranes, the main body and the chassis are formed as an integral assembly; therefore, the crane may be subject to the restriction of "height limit", "weight limit", and "width limit" during road transportation.

The technical solution in the prior art has the following drawbacks: a single super-high power engine has high cost and low reliability; the transfer case is bulky and difficult to install; the crane may be subject to restrictions of road condition during road transportation. At present, there is no effective solution for those problems.

### Summary of the Invention

The object of the present invention is to provide a power unit and a controlling method for the power unit, to overcome the drawbacks in the prior art, i.e., a single super-high power engine has high cost and low reliability, the transfer case is bulky and difficult to install, and the crane may be subject to restrictions of road condition during road transportation.

To achieve the above object, according to an aspect of the present invention, there is provided a power unit.

The power unit provided in the present invention comprises two or more power modules, each of which comprises an engine, a transfer case connected to the engine, and a hydraulic pump set connected to the transfer case.

Moreover, the power unit provided in the present invention further comprises a pin and a quick coupler, for connecting the power unit to the main body of a crane.

Moreover, the power unit in the present invention further comprises a control module, which is configured to receive an instruction for selecting one or more of the engines, receive a signal for starting or stopping the selected engine, and receive a signal for controlling the throttle of the selected engine; send an engine start or stop signal to the selected engine, and send a throttle control signal to the selected engine.

Moreover, the control module is also configured to: generate a signal for regulating the throttle of the selected engine according to the speed data of the selected engine and the throttle control signal of the selected engine, and then send the generated signal to the selected engine.

Moreover, the control module comprises a programmable logic controller (PLC). To achieve the above object, according to another aspect of the present invention, there is provided a controlling method for the power unit in the present invention.

The controlling method for the power unit in the present invention comprises: receiving an instruction for selecting one or more of the engines in the power unit, receiving a signal for starting or stopping the selected engine, and receiving a signal for controlling the throttle of the selected engine; sending an engine start or stop signal to the selected engine, and sending a throttle control signal to the selected engine.

Moreover, the method further comprises the following step before the step of receiving an instruction for selecting one or more of the engines in the power unit: selecting one or more of the engines in the power unit from the man-machine interface (MMI) of the PLC.

Moreover, the method further comprises the following step before the step of receiving a signal for starting or stopping the selected engine: sending a signal for starting or stopping the selected engine via a start switch.

In the technical solution of the present invention, a plurality of power modules are provided in the power unit, and each power module comprises an engine, a transfer case, and a hydraulic pump set; hence, a plurality of smaller engines can be used to deliver high power output required for the power unit, and the drawbacks of using a single super-high power engine (i.e., high cost and low reliability) are avoided. In addition, in the power unit composed of a plurality of power modules in the embodiment, the size of the transfer case in each power module is small; the power unit in the embodiment can be connected to the main unit of a crane via a pin and quick coupler available in the prior art when it is used in a construction site, and therefore is easy to install; in that way, the crane will not be subject to restrictions of road condition during road transportation.

### Brief Description of the Drawings

The accompanying drawings are provided to further illustrate the present invention and constitute a part of the present invention; the embodiments and associated descriptions in the present invention are provided to interpret the present invention, and shall not be deemed as constituting any undue limitation to the present invention. In the drawings:
Figure 1 is a schematic structural diagram of the power unit in an embodiment of the present invention;
Figure 2 is a layout plan of the power unit in the embodiment of the present invention.

### Detailed Description of the Embodiments

It is noted that the embodiments and the features in the embodiments can be combined freely, provided that there is no confliction between them. Hereinafter the present invention will be detailed in the embodiments, with reference to the accompanying drawings.

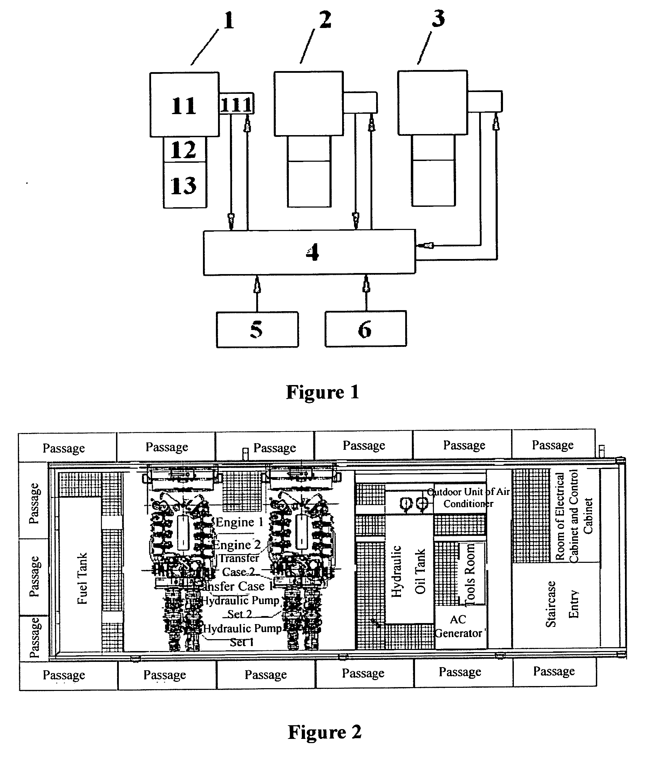

Figure 1 is a schematic structural diagram of the power unit in an embodiment of the present invention.

In this embodiment, as shown in Figure 1, the power unit comprises a plurality of power module; 3 power modules are shown in the drawings, i.e., power modules 1∼3. More power modules can be used as required in this embodiment. Each power module comprises an engine, a transfer case, and a hydraulic pump set, for example, the engine 11, transfer case 12, and hydraulic pump set 13 shown in Figure 1; wherein, the transfer case 12 is connected to the engine 11, and the hydraulic pump set 13 is connected to the transfer case 12. Each engine comprises a control unit EMC, for example, the control unit 111 shown in the drawing. The power modules are similar to each other in structure.

With the power unit shown in Figure 1, smaller engines can be used in this embodiment to deliver high output power for the entire power unit, and each transfer case is small in size.

In this embodiment, the power unit shown in Figure 1 can further comprise a pin and a quick coupler, which are not shown in Figure 1. When the power unit shown in Figure 1 is connected to the main body of a crane, the pin and quick coupler can be used as the connecting parts to connect one or more hydraulic pump sets with a hydraulic actuator such as hydraulic motor or oil cylinder. The connection work can be done on the construction site of the crane, and thereby the restrictions of road conditions for crane size and weight can be reduced during road transportation.

The power unit in this embodiment of the present invention can further comprise a control module, for example, the control module 4 shown in Figure 1. When the power unit in this embodiment is used in construction work, one or more engines should be selected first; then, these engines can be started, the throttles of the engines can be controlled, and the engines can be stopped as required. Therefore, the functions of the control module 4 include: receive an instruction for selecting one or more of the engines, receive a signal for starting or stopping the selected engine, and receive a signal for controlling the throttle of the selected engine.

In this embodiment, the signal for starting or stopping the selected engine can be received via an accelerator pedal 5, and the signal for starting or stopping the selected engine can be received via a start switch 6. The functions of the control module 4 further include: send an engine start or stop signal to the selected engine, and send a throttle control signal to the selected engine; both types of signals are sent to the control unit of the selected engine.

With these functions of the control module, signals for starting or stopping several engines or controlling throttles simultaneously can be received; once receiving these signals, the control module 4 can control the engines. In that process, the control module 4 acquires engine speed data via the control units of engines, and, with the signals for controlling engine throttles, generates signals for regulating engine throttles and sends the generated signals to the selected engines (specifically, the control units of the engines), so as to control the operation of several engines at the same time.

In this embodiment, the control module 4 can compare the engine speed among the engines in operation. In the hoisting process of the crane, for engines with lower engine speed, for example, engines with engine speed lower than the average speed of the engines, or one or more engines with the lowest speed, the control module 4 can increase the throttle to increase the engine speed via the control units of the engines, so as to avoid engine flame-out. Similarly, in the descending process, for one or more engines with higher engine speed, the control module 4 can reduce the throttle via the control units of these engines to decrease the engine speed, so as to avoid over-speed phenomenon.

In this embodiment, the control module 4 can employ a PLC as the main control element, and the status and engine speed of the engines can be displayed on the MMI of the PLC and engine options can be selected on the MMI. In that way, the operation condition of the power unit can be ascertained intuitively.

Figure 2 is a layout plan of the power unit in the embodiment of the present invention. In this embodiment, the power unit has two power modules, and the power unit and other devices can be arranged in the form shown in Figure 2 on the construction site.

Based on the power unit in the embodiments of the present invention, hereunder a controlling method for the power unit will be detailed.

In the present invention, the controlling method for the power unit mainly comprises: receiving an instruction for selecting one or more of the engines in the power unit, receiving a signal for starting or stopping the selected engine, and receiving a signal for controlling the throttle of the selected engine.

In this embodiment, one or more engines in the power unit can be selected on the MMI of the PLC first; then, the instruction for starting the selected engines can be sent by means of a start switch; once the instruction is received by the PLC, the PLC will transmit the instruction for starting the selected engine to the control unit of the engine; after the selected engine starts, the instruction for controlling the throttle can be sent from an accelerator pedal to the PLC, and that instruction will also be transmitted by the PLC to the control unit of the selected engine.

It is seen from the above description: in the technical solution of the present invention, a plurality of power modules are arranged in the power unit, and each power module comprises an engine, a transfer case, and a hydraulic pump set; hence, a plurality of smaller engines can be used to deliver high power output required for the power unit, and the drawbacks of using a single super-high power engine (i.e., high cost and low reliability) are avoided. In addition, in the power unit composed of a plurality of power modules in this embodiment, the size of transfer case in each power module is small; the power unit in this embodiment can be connected to the main body of a crane via existing pin roll and quick coupling in the prior art when it is used on a project site, and therefore is easy to install; in that way, the crane will not be subject to restrictions of road condition during road transportation.

While the present invention has been illustrated and described with reference to some preferred embodiments, the present invention is not limited to these. Those skilled in the art should recognize that various variations and modifications can be made, without departing from the spirit and scope of the present invention as defined by the accompanying claims. However, any modification, equivalent replacement, or refinement to the embodiments without departing from the spirit and principle of the present invention shall be deemed as falling into the protected domain of the present invention.

## Claims

1. A power unit, comprising two or more power modules, each of which comprises:
an engine;
a transfer case connected to the engine;
a hydraulic pump set connected to the transfer case.

2. The power unit according to claim 1, further comprising a pin and a quick coupler, for connecting the power unit to the main body of a crane.

3. The power unit according to claim 1, further comprising a control module configured to:
receive an instruction for selecting one or more of the engines, receive a signal for starting or stopping the selected engine, and receive a signal for controlling the throttle of the selected engine;
send an engine start or stop signal to the selected engine, and send a throttle control signal to the selected engine.

4. The power unit according to claim 3, wherein, the control module is further configured to:
generate a signal for regulating the throttle of the selected engine according to the speed data of the selected engine and the throttle control signal of the selected engine, and then send the generated signal to the selected engine.

5. The power unit according to claim 3 or 4, wherein, the control module comprises a programmable logic controller (PLC).

6. The power unit according to claim 3 or 4, further comprising a pin and a quick coupler, for connecting the power unit to the main body of a crane.

7. A controlling method for the power unit according to any one of claims 1∼4, comprising:
receiving an instruction for selecting one or more of the engines in the power unit, receiving a signal for starting or stopping the selected engine, and receiving a signal for controlling the throttle of the selected engine;
sending an engine start or stop signal to the selected engine, and sending a throttle control signal to the selected engine.

8. The method according to claim 7, further comprising the following step before the step of receiving an instruction for selecting one or more of the engines in the power unit: selecting one or more of the engines in the power unit from the man-machine interface (MMI) of the PLC.

9. The method according to claim 7, further comprising the following step before the step of receiving a signal for starting or stopping the selected engine: sending a signal for starting or stopping the selected engine via a start switch.
